# FASCICULE DE BREVET EUROPEEN

(11) **EP 0 955 281 B1**
(45) Date de publication et mention de la délivrance du brevet: **26.11.2003**
(21) Numéro de dépôt: 99401094.0
(22) Date de dépôt: 05.05.1999
(51) Int. Cl.: C04B 35/83, F16D 69/02

(54) **Matériau composite de type carbone/carbone ayant une résistance accrue à l'oxydation**
Verbundwerkstoff des Typs Kohlenstoff/Kohlenstoff mit erhöhter Oxidationsbeständigkeit
Carbon/carbon type composite material having an increased oxidation resistance

(30) Priorité: 07.05.1998 FR 9805792
(43) Date de publication de la demande: 10.11.1999
(73) Titulaire: Société Nationale d'Etude et de Construction de Moteurs d' Aviation, 75015 Paris (FR)
(72) Inventeur: Labruquere, Sandrine, 83, avenue Jacques Coeur, 86000 Poitiers (FR); Pailler, René, 33610 Cestas (FR); Thebault, Jacques, 33200 Bordeaux (FR); Goujard, Stéphane, 33700 Merignac (FR)
(74) Mandataire: Joly, Jean-Jacques

(56) Documents cités:
- EP-A- 0 483 009

## Description

### Domaine de l'invention

La présente invention concerne l'amélioration de la résistance à l'oxydation des matériaux composites de types carbone/carbone (C/C), c'est-à-dire des matériaux composites comprenant un renfort fibreux en fibres de carbone ou revêtues de carbone noyé dans une matrice constituée de carbone, au moins au voisinage des fibres.

Un domaine d'application de l'invention est plus particulièrement, mais non exclusivement, l'amélioration de la résistance à l'oxydation des matériaux composites de type C/C dont la température d'utilisation n'excède pas environ 1000°C et dans lesquels le carbone des fibres et de la matrice est exposé en surface. Il peut en être ainsi soit par disparition d'une protection anti-oxydation de surface, par exemple après un usinage ou une usure en service, soit par défaut volontaire d'une protection anti-oxydation de surface, comme c'est le cas par exemple pour les surfaces frottantes de disques de frein en matériau composite de type C/C.

### Arrière-plan de l'invention

Les matériaux composites de type C/C sont remarquables par leurs propriétés thermostructurales, c'est-à-dire des propriétés mécaniques qui les rendent aptes à constituer des éléments de structure et la capacité de conserver ces propriétés mécaniques jusqu'à des températures élevées. Toutefois, ces matériaux, placés en atmosphère agressive lors de leur utilisation, sont susceptibles d'être dégradés par la corrosion s'attaquant aux fibres du renfort ou à la matrice.

Une corrosion qui pose en pratique des problèmes particulièrement aigus est l'action de l'oxygène ou l'action combinée de l'oxygène et de l'eau, qui se manifeste lorsque les matériaux de type C/C sont placés à température élevée en présence d'air, d'humidité, de pluie.... Il est alors d'usage de munir les matériaux de type C/C d'une protection.

Il existe un état de la technique très abondant à propos de la protection anti-oxydation des matériaux composites contenant du carbone.

Les procédés connus font notamment appel à la formation d'une protection externe et/ou interne ayant des propriétés cicatrisantes pour colmater, remplir ou étancher des fissures apparaissant dans le matériau. Une telle protection comprend typiquement un composé du bore et/ou un composé du silicium permettant d'aboutir à la formation d'un verre à base d'oxyde de bore (B₂O₃), à base de silice (SiO₂) ou d'un verre borosilicaté. La composition de la protection est choisie pour aboutir à un verre qui présente un comportement visqueux à la température d'utilisation du matériau afin de remplir la fonction de cicatrisation.

Il peut être fait référence au document US-A-5 246 736 qui mentionne un état de la technique assez détaillé et décrit la formation d'une phase continue constituée par un système ternaire Si-B-C en surface d'un matériau composite à protéger, ou au sein de la matrice de celui-ci.

Ces procédés connus tirent leur efficacité de la formation d'une protection qui, en dépit de la fissuration du matériau, isole de façon étanche du milieu ambiant le carbone des fibres ou de la matrice du matériau. Il n'en est plus ainsi lorsque, de façon accidentelle ou délibérée, le carbone des fibres ou de la matrice se trouve exposé à la surface du matériau.

En particulier, dans le cas d'éléments de friction tels que des disques de frein en matériau composite C/C, un revêtement de protection anti-oxydation peut être formé de façon sélective sur les faces non frottantes, par exemple comme décrit dans le document US 5 686 144, mais non sur les faces frottantes. En effet, un tel revêtement de protection sur les faces frottantes altérerait les caractéristiques de friction du matériau et serait amené à disparaître à plus ou moins brève échéance en raison de l'usure due au frottement.

Dans leurs utilisations actuelles, notamment pour des freins d'avion, les éléments de friction en composite C/C sont exposés à des conditions favorisant l'usure par oxydation : température de service élevée et présence de circonstances aggravantes telles que l'humidité et influence de catalyseurs d'oxydation tels que des produits utilisés pour le dégivrage de pistes.

### Brève description de l'invention

Aussi, la présente invention a-t-elle pour but d'accroître la résistance à l'oxydation des matériaux composites de type C/C, notamment lorsque le carbone des fibres du renfort fibreux et de la matrice est exposé accidentellement ou non, à un environnement oxydant.

Ce but est atteint du fait qu'une interphase est présente entre les fibres du renfort fibreux et la matrice, cette interphase étant constituée de 1 à 20 % en pourcentage atomique de silicium, d'au moins 30 % en pourcentage atomique de bore, le reste éventuel étant du carbone et/ou du phosphore. Le silicium pourra en tout ou partie être remplacé par du germanium.

Les inventeurs ont mis en évidence que, lorsque le carbone des fibres et de la matrice d'un matériau composite de type C/C est exposé à des conditions oxydantes, l'attaque par oxydation se produit de façon privilégiée au niveau de l'interface entre renfort fibreux et matrice. Il en résulte une déliaison entre les fibres et la matrice qui dégrade fortement les caractéristiques du matériau composite même lorsque la perte de masse par oxydation est faible. Cette déliaison, qui fait perdre son caractère composite au matériau au voisinage de sa surface induit aussi une usure excessive lors du frottement.

C'est ainsi que, dans le cas d'un disque de frein d'avion en matériau composite C/C, l'oxydation qui se produit après un atterrissage, tant que le matériau reste chaud, entraîne une dégradation de la structure du matériau en surface, et cette partie dégradée présente une bien moindre résistance au frottement lors d'une utilisation ultérieure du frein. Il en résulte, et cela a été observé, qu'une usure des disques en matériau composite C/C peut être plus importante lors d'un taxiage à froid, après un atterrissage, que lors d'un atterrissage pendant lequel le disque est pourtant soumis à des sollicitations très élevées.

Comme montré ci-après, la formation d'une interphase contenant du silicium, du bore et éventuellement du carbone et/ou du phosphore permet de s'opposer efficacement à l'attaque de l'interface fibres-matrice dès lors que cette interphase est relativement riche en bore. La composition de l'interphase est de préférence choisie pour que l'augmentation de volume résultant de la formation d'oxydes B₂O₃, SiO₂ (et/ou GeO₂) et éventuellement P₂O₅ compense sensiblement le volume de carbone consommé par l'oxydation aux températures d'utilisation. La présence de phosphore facilite la protection contre l'oxydation aux plus basses températures et étend donc l'efficacité de l'interphase au domaine d'oxydation commençante du carbone. Typiquement l'interphase est constituée de 5 à 10% en pourcentage atomique de silicium et/ou germanium, de 50 à 70% en pourcentage atomique de bore et de 10 à 30% en pourcentage atomique de carbone et/ou phosphore.

L'interphase constitue une couche mince, et non une phase de matrice. Son épaisseur est ainsi inférieure à 1 µm, de préférence au plus égale à 300 nm. De préférence encore, cette épaisseur est au moins égale à 10 nm. Une couche réfractaire ne contenant pas de bore, par exemple en carbure réfractaire tel que carbure de silicium, de zirconium ou de hafnium peut être interposée entre les fibres du renfort fibreux et l'interphase. Cette couche réfractaire permet d'éviter une diffusion de bore dans le carbone des fibres ou revêtant les fibres du renfort fibreux, qui aurait pour effet d'affecter les propriétés mécaniques du renfort.

L'invention est remarquable en ce que, dans le domaine envisagé (température d'utilisation pouvant aller jusqu'à 1000°C) une protection contre l'oxydation d'un matériau composite C/C est apportée par une couche mince d'interphase entre fibres et matrice, alors que les modes de protection usuels des matériaux composites C/C impliquent la formation d'un revêtement protecteur externe, ou au moins l'incorporation de barrières de protection au sein de la matrice.

Le domaine d'application de l'invention n'est pas limité au cas où le carbone des fibres du renfort fibreux et de la matrice est exposé au milieu ambiant de façon délibérée ou à la suite d'une usure normale, mais englobe aussi le cas où une telle exposition peut être accidentelle. Dans ce dernier cas, il est possible de compléter la protection anti-oxydation du matériau par une protection externe et/ou une protection interne, incorporée dans la matrice. De telles protections peuvent être des couches à propriété cicatrisante formées de composés du bore et/ou du silicium, comme celles de l'art antérieur évoqué plus haut, ou des couches à base de phosphates, par exemple comme celles des documents EP-A-0 619 801 et EP-A-0 789 677.

L'invention a aussi pour but de fournir un procédé pour améliorer la résistance à l'oxydation de matériaux composites de type C/C.

Ce but est atteint grâce à un procédé selon lequel une interphase constituée de 1 à 20 % en pourcentage atomique de silicium, d'au moins 30 % en pourcentage atomique de bore, le reste éventuel étant du carbone et/ou du phosphore, est formée sur le carbone des fibres du renfort fibreux. Le silicium peut être remplacé en tout ou partie par du germanium. La composition de l'interphase est de préférence choisie pour que l'augmentation de volume résultant de l'oxydation de ses éléments silicium, bore et éventuellement phosphore compense le volume de carbone consommé par oxydation. L'interphase peut être formée par infiltration chimique en phase vapeur à partir d'une phase gazeuse réactive contenant des précurseurs des éléments constitutifs de l'interphase.

Selon un autre mode de mise en oeuvre du procédé, l'interphase peut être seulement formée par apport de silicium et de bore à partir de précurseurs gazeux. Le silicium et le bore peuvent alors diffuser et former une interphase constituée par un système ternaire silicium-bore-carbone (Si-B-C), le carbone provenant des fibres du renfort. Les précurseurs sont par exemple des chlorures de silicium (SiCl₄) et de bore (BCl₃) donnant du silicium et du bore en présence de gaz hydrogène (H₂). Dans le cas où du germanium est substitué en tout ou partie au silicium, le précurseur utilisé est par exemple le chlorure de germanium (GeCl₄). Dans le cas où du phosphore est substitué à tout ou partie du carbone, le précurseur gazeux du phosphore est par exemple du bromure de phosphore PBr₃.

Selon encore un autre mode de mise en oeuvre du procédé, l'interphase peut être formée par pack-cémentation, notamment par un traitement thermochimique permettant d'engendrer une interphase ternaire Si-B-C et/ou P par cémentation activée.

La formation de l'interphase peut être réalisée après élaboration du renfort fibreux et avant formation de la matrice. En variante, le matériau composite de type C/C est réalisé puis soumis à un traitement thermique de graphitation du carbone, à une température comprise entre 1200°C et 3000°C qui engendre une décohésion entre fibres du renfort fibreux et matrice carbone, et l'interphase est formée ensuite à l'interface entre les fibres du renfort fibreux et la matrice, par infiltration chimique en phase vapeur ou par un des autres processus évoqués plus haut.

Des exemples de réalisation du procédé et du matériau obtenu seront décrits ci-après à titre indicatif mais non limitatif.

### Brève description des dessins

Sur les dessins annexés :
- les figures 1A et 1B montrent les étapes successives de réalisation d'un matériau composite de type C/C protégé contre l'oxydation selon deux modes de mise en oeuvre de l'invention ;
- la figure 2 illustre très schématiquement une installation d'infiltration chimique en phase vapeur utilisable pour la réalisation d'un matériau composite selon le procédé de la figure 1A ;
- les figures 3A et 3B montrent très schématiquement comment l'interphase entre fibres et matrice du matériau composite se trouve exposée après usinage ou usure ;
- les figures 4 et 5 sont des vues obtenues par microscope électronique montrant l'aspect d'un matériau composite C/C après oxydation dans l'air sec à 600°C pendant 6 h, respectivement avec une interphase Si-B-C d'épaisseur 200 nm, et avec une interphase de type Si-C ;
- les figures 6 à 9 sont des vues obtenues par microscope optique montrant l'aspect d'un matériau composite C/C après oxydation dans l'air sec à 600°C pendant 16 h, respectivement avec une interphase Si-B-C d'épaisseur 100 nm, avec une interphase Si-B-C d'épaisseur 30 nm, sans interphase, et avec une interphase de type B-C ;
- les figures 10 et 11 sont des vues obtenues par microscope optique montrant les faciès de rupture en traction d'un matériau composite C/C après oxydation dans l'air sec à 600°C pendant 16 h, avec une interphase Si-B-C d'épaisseur 100 nm et avec une interphase Si-B-C d'épaisseur 30 nm ;
- la figure 12 est une courbe illustrant la variation dans le temps de la perte de masse relative d'un matériau composite C/C exposé à l'air humide à 600°C, respectivement avec une interphase de Si-B-C d'épaisseur 100 nm et sans interphase ;
- la figure 13 est un schéma montrant l'oxydation préférentielle à l'interface fibres-matrice d'un matériau composite C/C ; et
- la figure 14 est un schéma montrant le comportement à l'oxydation d'un matériau composite de type C/C muni d'une interphase, conformément à l'invention.

### Description de modes préférés de réalisation

Le domaine d'application de l'invention est celui des matériaux composites de type C/C. Par matériau composite de type C/C, on entend ici un matériau composite ayant un renfort fibreux en fibres de carbone ou revêtues de carbone, densifié par une matrice en carbone ou au moins en partie en carbone au voisinage des fibres du renfort. Un renfort fibreux en fibres revêtues de carbone est par exemple un renfort en fibres céramique, telles que des fibres en carbure de silicium (SiC), revêtues d'une couche de carbone, telle qu'une couche de carbone pyrolytique, ou pyrocarbone, formée par dépôt ou infiltration chimique en phase vapeur. Une matrice en partie en carbone est par exemple une matrice à plusieurs phases comprenant au moins une phase en carbone au voisinage des fibres du renfort fibreux et au moins une phase en un matériau autre que le carbone, telle qu'une phase céramique, par exemple en SiC, en carbure de bore (B₄C) ou en un système ternaire Si-B-C tel que décrit dans le document US-A-5 246 736 précité, une phase SiC pouvant être obtenue par infiltration chimique en phase vapeur ou par siliciuration à partir de silicium infiltré à l'état fondu.

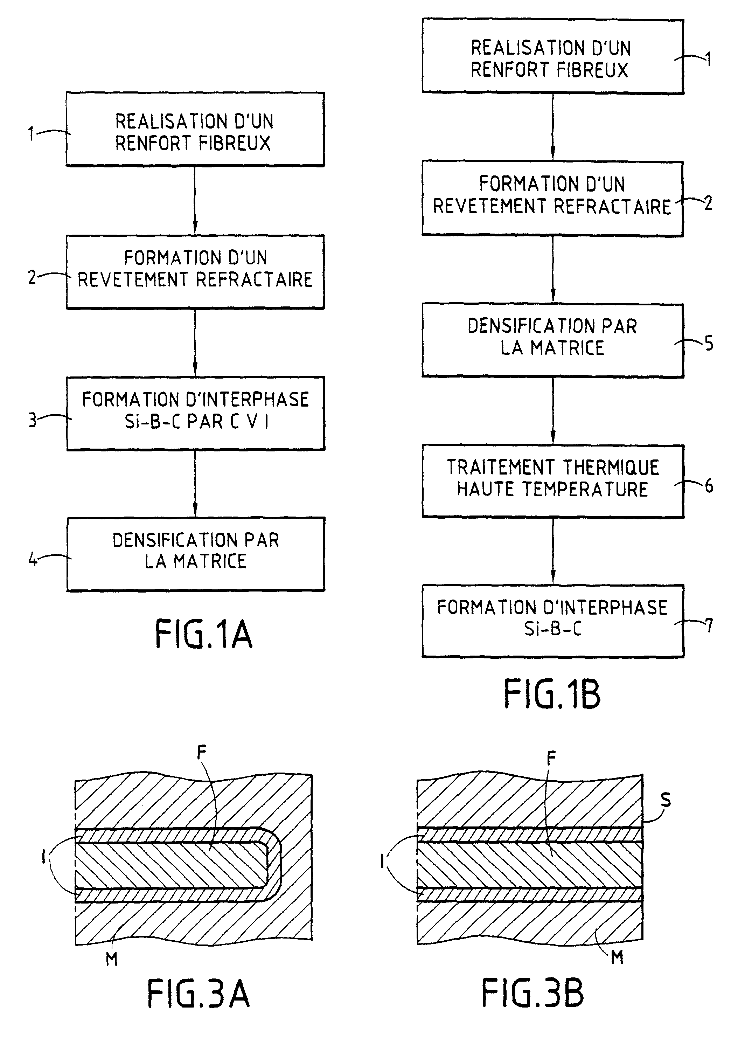

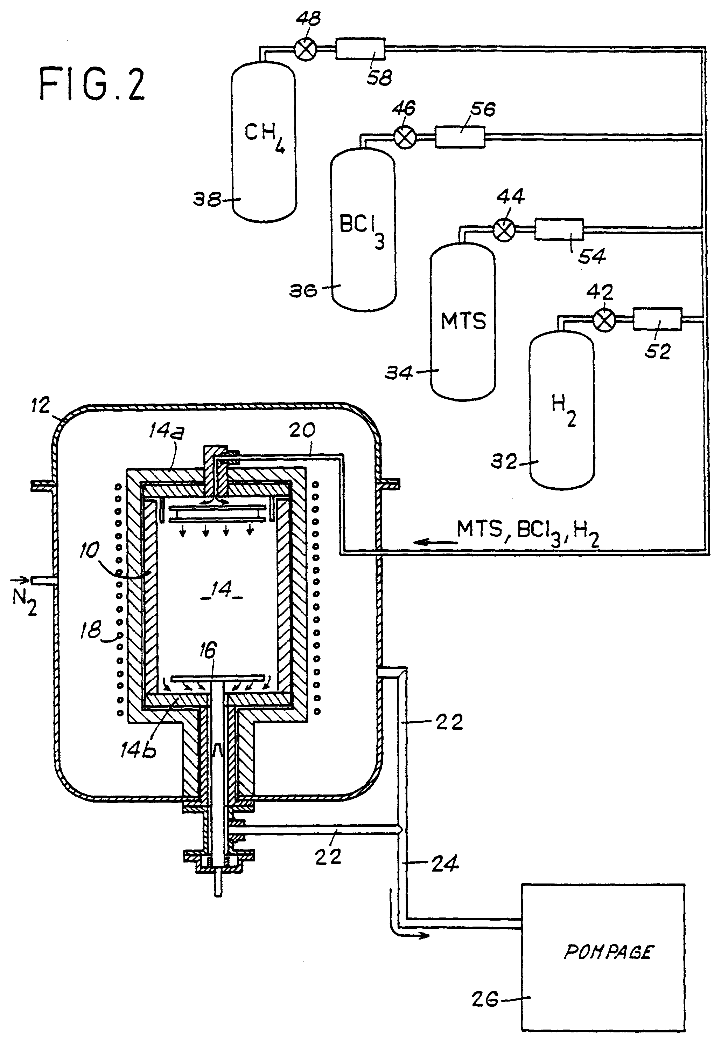

Une première étape 1 (figure 1A) de mise en oeuvre d'un procédé de fabrication d'une pièce en matériau composite de type C/C ayant une résistance accrue à l'oxydation, conformément à l'invention, consiste à réaliser un renfort fibreux.

Le renfort fibreux peut être de type unidirectionnel (1D), bidimensionnel (2D) ou tridimensionnel (3D). Dans un renfort 2D, les fibres forment un système bidimensionnel constitué par un tissu ou des nappes de fils ou de câbles éventuellement en quelques couches superposées. Dans un renfort 3D, les fibres forment un système tridimensionnel obtenu par exemple par tissage tridimensionnel ou par superposition et liaison entre elles de strates bidimensionnelles de tissu, feutres, nappes de fils ou de câbles ou encore par enroulement en spires superposées à plat de tissu hélicoïdal ou de tresse déformable et liaison entre elles des spires superposées. La liaison des strates ou spires superposées peut être réalisée par aiguilletage ou implantation de fils. Le renfort fibreux peut être réalisé sous forme d'une préforme fibreuse dont la forme correspond à celle d'une pièce en matériau composite à réaliser.

De préférence, mais de façon optionnelle, une deuxième étape 2 consiste à munir les fibres du renfort fibreux d'un revêtement réfractaire formant barrière de protection vis-à-vis du bore contenu dans l'interphase formée ultérieurement conformément à l'invention. Le revêtement de protection est par exemple en un carbure de silicium, de zirconium ou d'hafnium. Il est sous forme d'une couche mince, par exemple d'épaisseur comprise entre 10 nm et 300 nm et est réalisée par infiltration chimique en phase vapeur, par cémentation ou par voie réactive par infiltration par du monoxyde de silicium (SiO) à l'état gazeux.

Ensuite, une interphase de type Si-B-C est formée (étape 3) sur les fibres du renfort fibreux munies éventuellement d'un revêtement réfractaire de protection. Cette interphase est constituée de 1 à 20% en pourcentage atomique de silicium, d'au moins 30% en pourcentage atomique de bore, le reste éventuel étant du carbone. L'interphase est sous forme d'une couche mince, par exemple d'épaisseur au moins égale à 10 nm et inférieure à 1 µm. Elle peut être réalisée par infiltration chimique en phase vapeur (CVI), par voie réactive ou par cémentation. Une partie au moins du carbone pourra être remplacée par du phosphore. Son oxydation génère l'oxyde P₂O₅ dont le rôle en tant qu'agent de protection vis-à-vis de l'oxydation catalytique du carbone est connu. En outre, une partie au moins du silicium pourra être remplacée par du germanium. Son oxydation génère l'oxyde GeO₂ qui est un formateur de réseau vitreux, de la même façon que le silice SiO₂.

La densification du renfort fibreux par la matrice du matériau composite (étape 4) est ensuite réalisée par voie liquide ou par voie gazeuse, la matrice étant en carbone au moins dans une première phase adjacente au renfort fibreux, et pouvant être éventuellement complétée par une phase céramique. La densification par voie liquide consiste à imprégner le renfort fibreux par un précurseur de la matrice à l'état liquide, par exemple une résine et à réaliser ensuite un traitement thermique par lequel le matériau constitutif de la matrice est obtenu par transformation du précurseur. Plusieurs cycles successifs d'imprégnation-traitement thermique peuvent être réalisés. La densification par voie gazeuse est réalisée par infiltration chimique en phase vapeur. Les procédés de formation de phases de matrice en carbone pyrolytique, ou céramique, par voie liquide ou voie gazeuse sont bien connus, ainsi que leurs combinaisons.

La figure 2 illustre de façon schématique une installation d'infiltration chimique en phase vapeur permettant de mettre en oeuvre les étapes 2, 3 et 4 pour former un revêtement de protection réfractaire en carbure de silicium SiC sur les fibres du renfort fibreux, puis une interphase de type Si-B-C et ensuite une matrice ayant au moins une phase carbone et éventuellement une ou plusieurs phases céramique contenant C, Si et/ou B.

Cette installation est analogue à celle décrite dans le document US-A-5 246 736 auquel il a déjà été fait référence.

L'installation comprend un suscepteur en graphite 10 situé à l'intérieur d'une enceinte 12 et délimitant une chambre de réaction 14 dans laquelle les renforts fibreux sont disposés sur un plateau tournant 16. Le chauffage du suscepteur est assuré par un inducteur 18 disposé autour de celui-ci.

L'alimentation de la chambre de réaction 14 par la phase gazeuse donnant le dépôt voulu est réalisée par une canalisation 20 qui traverse la paroi de l'enceinte 12 et aboutit dans la chambre 14 à travers un couvercle 14a fermant celle-ci à sa partie supérieure.

L'extraction des gaz résiduels hors de la chambre de réaction est réalisée au moyen d'une ou plusieurs conduites 22 qui s'ouvrent dans le fond 14_{b} de la chambre et se raccordent, à l'extérieur de l'enceinte, à une canalisation 24 reliée à un dispositif de pompage 26.

Le volume situé autour du suscepteur 10, à l'intérieur de l'enceinte 12, est balayé par un gaz neutre, tel que de l'azote N₂ formant tampon autour de la chambre de réaction.

Des sources de gaz 32, 34, 36, 38 fournissent les constituants de la phase gazeuse introduite dans la chambre de réaction. Chaque source est reliée à la canalisation 20 par une conduite comprenant une vanne d'arrêt à commande automatique, respectivement 42, 44, 46, 48 et un débitmètre massique, respectivement 52, 54, 56, 58, les débitmètres permettant de réguler les proportions relatives des constituants de la phase gazeuse.

Pour le dépôt des éléments Si, B et C, la phase gazeuse est constituée d'un mélange de précurseurs des éléments Si, B et C auxquels est ajouté un élément réducteur tel l'hydrogène H₂.

Les éléments C et Si peuvent être générés par des précurseurs appartenant respectivement aux familles des hydrocarbures et des silanes ou chlorosilanes. Ils peuvent être également générés conjointement par décomposition de précurseur organo-silicié, tel le méthyltrichlorosilane (MTS).

L'élément B est généré par un borane ou un halogénure, tel le trichlorure de bore (BCl₃).

Les sources de gaz 32, 34, 36 sont par conséquent, respectivement des sources d'H₂, de MTS et de BCl₃.

La source de gaz 38 est une source d'hydrocarbure, par exemple de méthane, permettant d'engendrer l'élément carbone.

Lorsque le carbone de l'interphase est au moins en partie remplacé par du phosphore, on utilise une source supplémentaire de gaz précurseur du phosphore, par exemple du bromure PBr₃ ; le précurseur gazeux choisi pour le bore est alors de préférence le bromure BBr₃.

Lorsque le silicium de l'interphase est au moins en partie remplacé par du germanium, on utilise une source supplémentaire de gaz précurseur du germanium, par exemple du chlorure de germanium GeCl₄.

Le revêtement de protection réfractaire en SiC est d'abord formé en admettant dans la chambre 14 une phase gazeuse constituée par un mélange de MTS et H₂, le dépôt étant poursuivi jusqu'à atteindre l'épaisseur désirée.

Ensuite l'interphase Si-B-C est réalisée en admettant dans la chambre un mélange de MTS, BCl₃ et H₂, les proportions relatives de MTS et BCl₃ dans la phase gazeuse étant choisies en fonction des proportions relatives de Si et B à obtenir dans l'interphase.

Ainsi par exemple, pour réaliser une interphase dans laquelle le pourcentage atomique de Si est au plus égal à 20% et le pourcentage atomique de B est au moins égal à 30%, le rapport entre débit volumique de MTS et débit volumique de BCl₃ doit être inférieur à 1,5, lorsque la température dans la chambre est égale à 1000°C.

On notera qu'il est extrêmement facile de passer du dépôt SiC au dépôt Si-B-C, puisqu'il suffit d'introduire le précurseur BCl₃ dans la phase gazeuse constituée par ailleurs de MTS et H₂, et d'ajuster les débits massiques. Cette modification de la phase gazeuse peut être progressive, ce qui permet une transition continue entre les dépôts SiC et Si-B-C,ou instantanée.

Les dépôts du revêtement SiC et de l'interphase Si-B-C sont réalisés à une température comprise entre 800°C et 1150°C et sous une pression comprise entre 0,1 et 100 kPa.

Des procédés autres que l'infiltration chimique en phase vapeur décrite ci-avant pourront être utilisés pour réaliser l'interphase Si-B-C.

Ainsi, un procédé alliant voie réactive et infiltration, ou procédé de type CVR (I) peut être utilisé qui consiste à engendrer les éléments silicium et bore à partir de précurseurs gazeux, lesquels éléments diffusent sur une profondeur limitée à partir de la surface des fibres carbone et forment une interphase de type Si-B-C dans laquelle le carbone est prélevé des fibres. Les précurseurs utilisés sont par exemple les chlorures SiCl₄ et BCl₃. L'infiltration est réalisée en présence de gaz hydrogène (H₂), à une température comprise environ entre 900°C et 1150°C, et sous une pression totale comprise environ entre 1 kPa et 15 kPa. On pourra utiliser une installation telle que celle de la figure 2 en remplaçant la source de MTS par une source de SiCl₄.

Un autre procédé utilisable consiste en un traitement thermochimique produisant l'interphase Si-B-C par cémentation activée, par exemple un procédé du type de celui décrit par la déposante dans la demande internationale PCT/FR/97 01 890. Selon ce procédé, le traitement est réalisé à une température comprise entre 700°C et 1300°C, sous une pression comprise entre 0,1 kPa et 30 kPa d'hydrogène, de gaz rare ou d'un mélange de ces gaz en présence d'un cément donneur et d'un composé activant solide. Le cément donneur est un mélange de poudres constitué de silicium et de bore alliés à un élément M choisi parmi l'aluminium, le calcium, le chrome, l'yttrium et le magnésium et, éventuellement à un élément modérateur M' choisi parmi le fer, le nickel, le chrome, le cobalt, le nolybdène et le tungstène. Le composé activant solide est un halogénure (chlorure ou fluorure, de préférence fluorure) de l'élément M choisi. A titre indicatif, on pourra choisir un cément donneur constitué de 55 % en poids de silicium, 25 % en poids de bore et 20 % en poids de magnésium, le composé activant étant le fluorure de magnésium MgF₂.

Lorsque l'interphase Si-B-C ayant l'épaisseur voulue est obtenue, la matrice carbone, ou au moins une première phase carbonée de la matrice est réalisée en admettant dans la chambre 14 le précurseur de carbone issu de la source 38. Avec un précurseur méthane, l'infiltration chimique en phase vapeur est réalisée à une température comprise entre 700°C et 2100°C et sous une pression comprise entre 0,5 kPa et 100 kPa. Il est possible d'incorporer dans la matrice une phase autre que pyrocarbone, notamment une phase SiC ou B₄C ou Si-B-C, en jouant sur la composition de la phase gazeuse admise dans la chambre 14.

Dans ce qui précède, il a été envisagé la formation de l'interphase de type Si-B-C avant formation de la matrice du matériau composite. Il est toutefois possible de procéder autrement comme illustré schématiquement par la figure 1B .

Après l'étape 1 de formation du renfort fibreux et l'étape éventuelle 2 de formation du revêtement de protection réfractaire, il est procédé à la densification du renfort par une matrice carbone ou une matrice ayant au moins une phase carbone du côté des fibres du renfort (étape 5). Le matériau composite ainsi obtenu est soumis à un traitement thermique à haute température (étape 6) visant à graphiter le carbone de la matrice et éventuellement celui des fibres. Ce traitement est réalisé à une température comprise environ entre 1200°C et 3000°C, typiquement à environ 2200°C. Il en résulte une décohésion entre les fibres du renfort fibreux et la matrice carbone.

Il est alors possible, par exemple par infiltration chimique en phase vapeur, de venir former un dépôt d'interphase de type Si-B-C à l'interface entre les fibres du renfort fibreux et la matrice (étape 7). Cette infiltration chimique en phase vapeur peut être réalisée au moyen d'une installation telle que celle de la figure 2. On retrouve alors la séquence fibres carbone - (revêtement de protection réfractaire éventuel) - interphase de type Si-B-C, et - matrice carbone. La formation de l'interphase Si-B-C par les processus utilisant la voie réactive ou la cémentation activée décrits plus haut est également envisageable.

La figure 3A montre de façon très schématique comment, après densification, une fibre F revêtue de l'interphase I est complètement enrobée par la matrice. Comme déjà indiqué, l'invention trouve plus particulièrement son application dans les cas où, après usinage ou usure, le carbone des fibres se trouve exposé au milieu ambiant. Dans ce cas, comme le montre la figure 3B, une fibre F, ainsi que l'interphase I formée sur celle-ci affleure à la surface S produite par usinage ou usure.

Des exemples de réalisation d'un matériau composite de type C-C ayant une résistance accrue à l'oxydation seront maintenant décrits.

Dans tous ces exemples, le renfort fibreux de départ est un renfort de type 3D constitué par des strates de tissu de carbone à précurseur polyacrylonitrile préoxydé, les strates étant superposées et liées les unes aux autres par aiguilletage. La superposition et l'aiguilletage des strates sont réalisés au stade précurseur, comme décrit par exemple dans le document US-A-4 790 052. La transformation du précurseur est réalisée par traitement thermique après formation du renfort fibreux.

En outre, dans tous les exemples, la matrice du matériau composite est réalisée entièrement en carbone pyrolytique, par infiltration chimique en phase vapeur.

### Exemple 1A

Il est formé sur le substrat fibreux une interphase constituée d'environ 10% en pourcentage atomique de Si, environ 40% en pourcentage atomique de B et environ 50% en pourcentage atomique de C.

L'interphase est réalisée par infiltration chimique en phase vapeur en utilisant une phase gazeuse constituée d'un mélange de MTS, BCl₃ et H₂ avec un rapport entre débits volumiques de MTS et BCl₃ égal à 1. Le débit volumique de H₂ est égal à 5 fois celui des autres gaz. La température et la pression totale dans la chambre d'infiltration sont égales respectivement à 920°C et 5 kPa. L'infiltration chimique en phase vapeur est poursuivie pendant 5 h jusqu'à atteindre une épaisseur de 300 nm pour l'interphase.

Le renfort fibreux muni de l'interphase est ensuite densifié par la matrice de carbone pyrolytique.

### Exemple 1B

Il est procédé comme dans l'exemple 1A mais en limitant l'épaisseur d'interphase à 30 nm. La durée d'infiltration est égale à 30 min.

### Exemple 2

Il est formé sur le substrat fibreux une interphase constituée d'environ 1,5% en pourcentage atomique de Si, environ 70% en pourcentage atomique de bore, environ 18,5% en pourcentage atomique de carbone et environ 10% en pourcentage atomique de phosphore.

L'interphase est réalisée par infiltration chimique en phase vapeur en utilisant une phase gazeuse constituée d'un mélange de MTS, BBr₃, PBr₃ et H₂ avec des débits volumiques respectivement égaux à 40 cm³/min, 110 cm³/min, 15 cm³/min et 200 cm³/min. La température dans la chambre d'infiltration est de 920°C et la pression totale est de 5 kPa. L'infiltration est poursuivie pendant 1 h, jusqu'à atteindre une épaisseur d'interphase d'environ 700 nm.

### Exemple 3A

Il est procédé comme dans l'exemple 1A, mais à une température de 950°C et en formant une interphase constituée environ de 9 % (at) de Si, 50% (at) de B et 41% (at) de C en utilisant une phase gazeuse dans laquelle le rapport entre débits volumiques de MTS et BCl₃ est égal à 0,5. L'épaisseur de l'interphase est de 250 nm au bout de 2,5 h d'infiltration.

### Exemple 3B

Il est procédé comme dans l'exemple 3A, mais en limitant l'épaisseur d'interphase à 100 nm, en diminuant la durée d'infiltration à 1 h.

### Exemple 3C

Il est procédé comme dans l'exemple 3A, mais en limitant l'épaisseur d'interphase à 30 nm, en diminuant la durée d'infiltration à 20 min.

### Exemple 4

Il est procédé comme dans l'exemple 1A, mais en formant une interphase constituée de 18 % (at) de Si, 37 % (at) de B et 45 % (at) de C en utilisant une phase gazeuse dans laquelle le rapport entre débits volumiques de MTS et BCl₃ est égal à 1. La température et la pression dans la chambre d'infiltration sont respectivement égales à environ 950°C et 5 kPa.

### Exemple 5 (comparatif)

Il est procédé comme dans l'exemple 1A, mais en formant une interphase constituée de 30 % (at) de Si, 30 % (at) de B et 40 % (at) de C en utilisant une phase gazeuse dans laquelle le rapport entre débits volumiques de MTS et BCl₃ est égal à 2. La température et la pression dans la chambre d'infiltration sont respectivement égales à environ 950°C et 5 kPa.

### Exemple 6 (comparatif)

Un renfort fibreux tel que celui de l'exemple 1A est densifié par une matrice de carbone pyrolytique, sans formation d'interphase.

### Exemple 7A (comparatif)

Un renfort fibreux tel que celui de l'exemple 1A est muni d'une interphase constituée de 55% (at) de Si et 45% (at) de C.

L'interphase est réalisée par infiltration chimique en phase vapeur en utilisant une phase gazeuse constituée d'un mélange de MTS et de H₂. La température et la pression dans la chambre d'infiltration sont respectivement égales à 950°C et 3 kPa. L'infiltration est poursuivie jusqu'à obtenir une interphase SiC d'épaisseur égale à 250 nm.

Le renfort fibreux muni de l'interphase SiC est ensuite densifié par la matrice de carbone pyrolytique.

### Exemple 7B (comparatif)

Il est procédé comme dans l'exemple 7A mais en limitant l'épaisseur d'interphase à 100 nm.

### Exemple 8A (comparatif)

Un renfort fibreux tel que celui de l'exemple 1A est muni d'une interphase constituée de 35 % (at) de B et 65% (at) de C.

L'interphase est réalisée par infiltration chimique en phase vapeur en utilisant une phase gazeuse constituée d'un mélange de BCl₃ et de propane C₃H₈.. La température et la pression dans la chambre d'infiltration sont respectivement égales à 950°C et 1 kPa. L'infiltration est poursuivie jusqu'à obtenir une interphase d'épaisseur égale à 250 nm.

Le renfort fibreux muni de l'interphase est ensuite densifié par la matrice de carbone pyrolytique.

### Exemple 8B (comparatif)

Il est procédé comme dans l'exemple 8A mais en limitant l'épaisseur d'interphase à 100 nm.

### Exemple 9

Un renfort fibreux tel que celui de l'exemple 1A est densifié par une matrice de carbone pyrolytique, sans formation préalable d'interphase.

Le matériau C/C obtenu est traité thermiquement à une température de 2800°C pendant une durée de 2 h réalisant une graphitation du carbone.

Après ce traitement thermique à haute température, le matériau C/C est soumis à une opération d'infiltration chimique en phase vapeur d'un système Si-B-C, dans les conditions de l'exemple 3A, la durée de l'infiltration étant limitée à 2 h. Il se forme un dépôt d'interphase ayant la composition de celle de l'exemple 3A dans les espaces créés entre les fibres carbone et la matrice carbone par la décohésion résultant du traitement thermique. Un dépôt Si-B-C se forme également dans la porosité de la matrice carbone et à la surface de celle-ci.

### Exemple 10

Il est procédé comme dans l'exemple 9, mais en portant la durée de l'infiltration chimique en phase vapeur du système Si-B-C à 4 h.

### Exemple 11 (comparatif)

Il est procédé comme dans l'exemple 9, mais sans réaliser d'infiltration chimique en phase vapeur d'un système Si-B-C après traitement thermique à haute température.

### Essais

Des essais d'oxydation ont été effectués sur des échantillons des matériaux obtenus conformément aux exemples précédents, après usinage en surface pour éviter de se trouver dans le cas d'une protection externe.

Les résultats des essais sont donnés ci-après, les échantillons étant identifiés par le numéro de l'exemple de réalisation correspondant.

### Essai 1 (oxydation sous air sec à 600°C)

Des échantillons 3A, 5, 7, 8, 9, 10 et 11 sont exposés à une température de 600°C dans l'air sec pendant 6 ou 8 h et les variations de masse en valeur relative (rapport entre variation de masse absolue et masse initiale) sont mesurées. Les résultats obtenus sont les suivants :

| Echantillon | 3A | 5 | 6 | 7A | 8A | 9 | 10 | 11 |
|---|---|---|---|---|---|---|---|---|
| Durée d'oxydation (h) | 6 | 6 | 6 | 6 | 6 | 8 | 8 | 8 |
| Type d'interphase | Si-B-C | Si-B-C | néant | Si-C | B-C | Si-B-C | Si-B-C | néant |
| Variation de masse relative (%) | -1,2 | -1,5 | -5,5 | -6,7 | -2,4 | -3,4 | -1,1 | -5,7 |

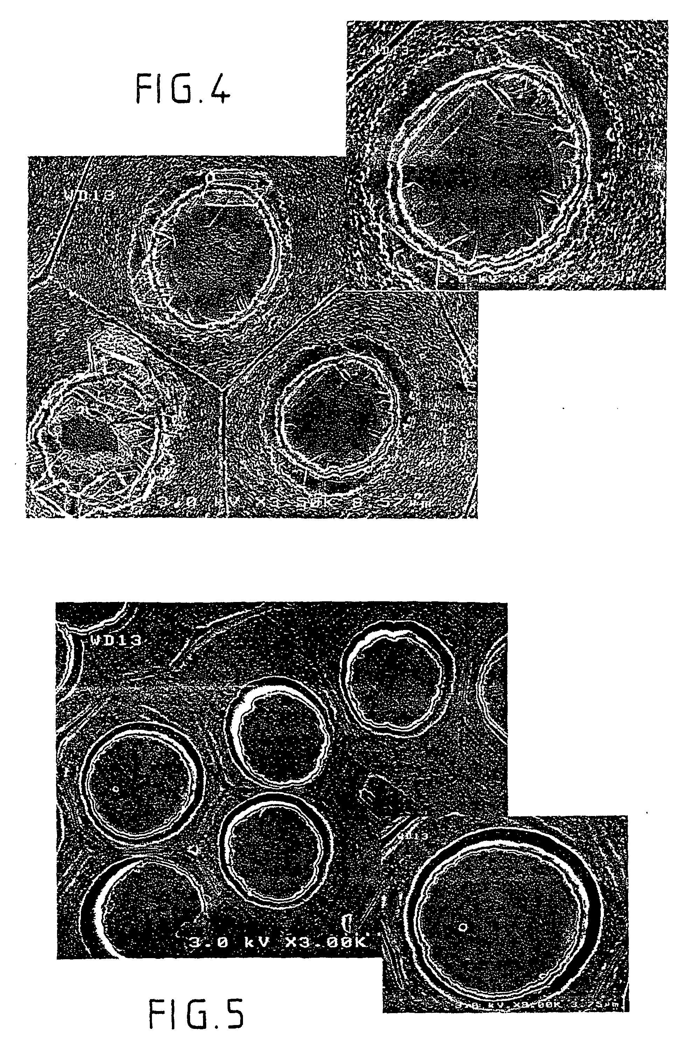

Les figures 4 et 5 sont des vues au microscope électronique montrant l'aspect des échantillons 3A et 7A après oxydation. La décohésion fibres-matrice est parfaitement visible sur la figure 5, alors que la figure 4 ne montre aucune décohésion.

### Essai 2 (oxydation sous air sec à 600°C pendant 16 h).

Des échantillons 1A, 1B, 6 et 8A sont exposés à 600°C sous air sec pendant 16 h.

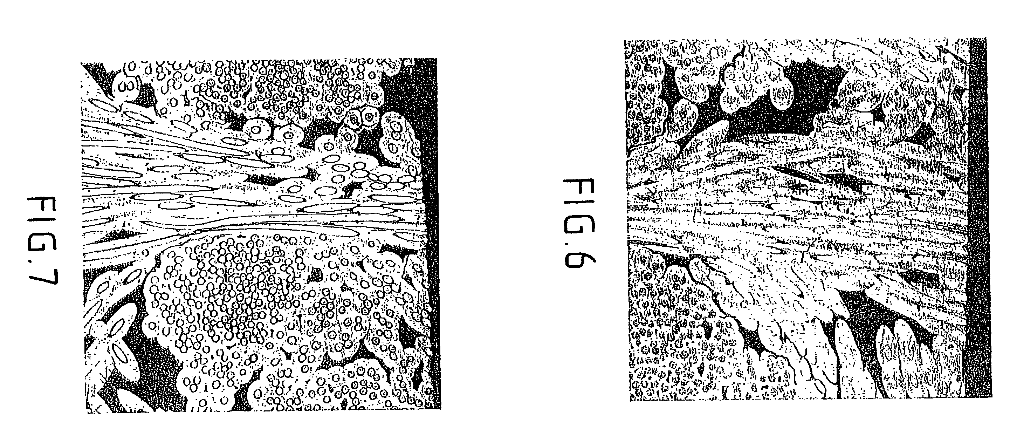

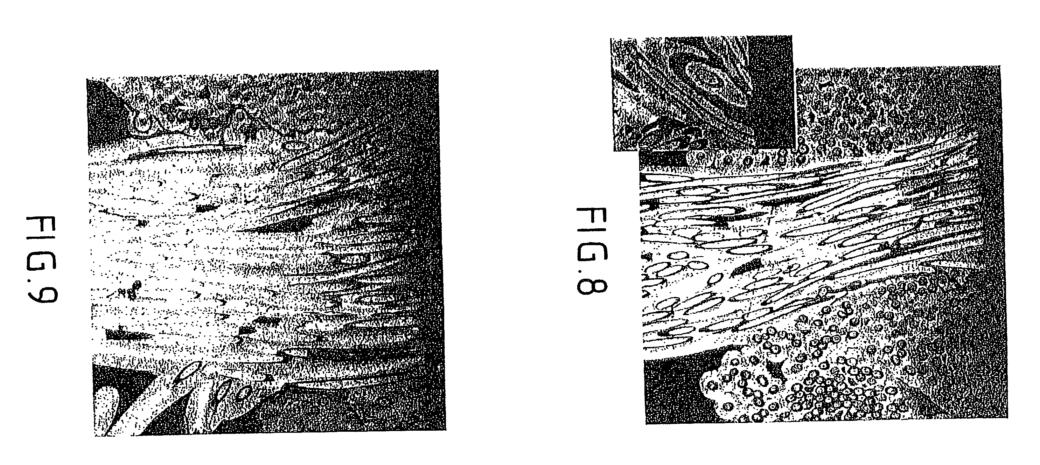

Les photographies des figures 6 à 9 montrent l'aspect des échantillons après oxydation, l'observation étant effectuée par microscopie optique avec grandissement de 20 (sauf pour le détail de la figure 8 où le grandissement est de 40).

La décohésion fibres-matrice est parfaitement visible sur les figures 8 et 9 (intervalle de couleur noire autour des fibres). Elle est également visible, mais dans une moindre mesure sur la figure 7. Par contre, aucune décohésion n'est visible sur la figure 6.

### Essai 3 (essai en traction après oxydation)

Des échantillons 3A, 3B, 3C sont exposés à 600°C sous air sec pendant 16 h, puis soumis à des essais de rupture en traction. Sont mesurés : le module d'Young, la contrainte à rupture et la déformation à la rupture. Les résultats obtenus sont :

| Echantillon | 3A | 3B | 3C |
|---|---|---|---|
| Type d'interphase | Si-B-C/ 250 nm | Si-B-C/ 100 nm | Si-B-C/ 30 nm |
| Module d'Young (GPa) | 11 | 24 | 14 |
| Contrainte à rupture (MPa) | 30 | 59 | 40 |
| Déformation à rupture (%) | 0,91 | 0,41 | 0,97 |

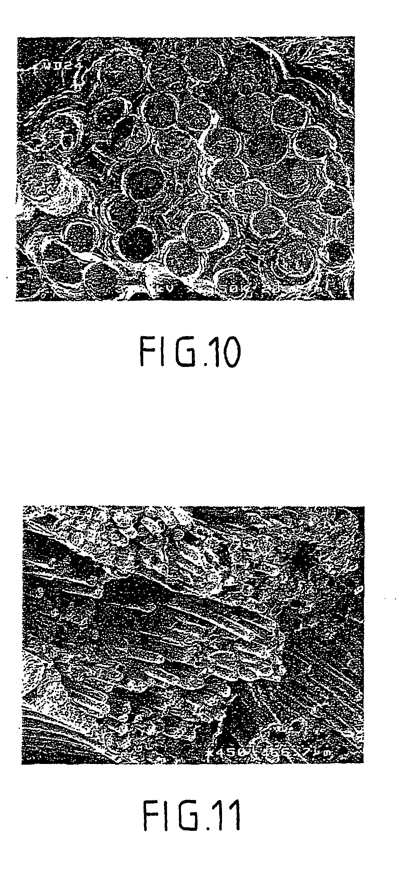

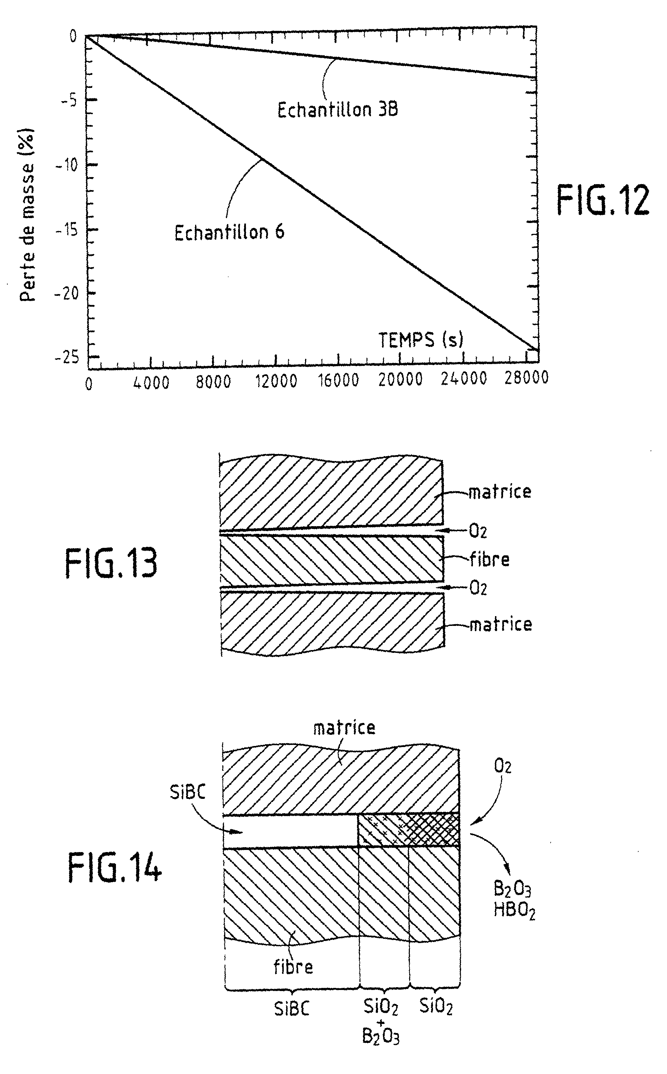

Les figures 10 et 11 sont des photographies montrant le faciès de rupture pour les échantillons 3B et 3C. On remarque sur la figure 11 un déchaussement des fibres, que traduit une relativement faible liaison fibres-matrice après oxydation. Par contre, la figure 10 ne montre pas de déchaussement, donc traduit une forte liaison fibres-matrice, ce que confirme la relativement faible déformation à rupture.

### Essai 4 (oxydation sous air sec à 800°C)

Des échantillons 1A, 3A, 3B, 5, 6, 7B, 8B sont exposés à 800°C sous air sec, et les vitesses d'oxydation radiale des fibres et de la matrice sont mesurées par observation périodique des échantillons au microscope électronique à balayage. La vitesse d'oxydation radiale est égale à la variation en fonction du temps de la largeur de la zone éliminée par oxydation en direction perpendiculaire aux fibres. Les résultats obtenus sont les suivants :

| Echantillon | 1A | 3A-3B | 5 | 6 | 7B | 8B |
|---|---|---|---|---|---|---|
| Type d'interphase | Si-B-C | Si-B-C | Si-B-C | néant | Si-C | B-C |
| Vitesse d'oxydation radiale de la fibre (µmh⁻¹) | 0 | 0 | 10 | 29 | 12 | 6,8 |
| Vitesse d'oxydation radiale de la matrice (µmh⁻¹) | 0 | 0 | 11 | 28,2 | 22 | 15,3 |

### Essai 5 (oxydation sous air humide à 600°C)

Des échantillons 3A et 6 sont exposés à 600°C à un flux d'air humide contenant 3 % en volume d'humidité, avec un débit de 500 l/h.

Les courbes de la figure 12 illustrent la variation en fonction du temps de la perte de masse relative. Au bout de 8 h, elle s'élève à 3,9 % pour l'échantillon 3A et à 25,4 % pour l'échantillon 6.

### Discussion des résultats d'essais

Les essais 1 (figures 6, 7, 8), 2, 4 et 5 (figure 12) montrent l'indéniable amélioration de la résistance à l'oxydation apportée par la présence de l'interphase Si-B-C entre fibres C et matrice C, en comparaison avec l'absence d'interphase, et ce dans des conditions d'oxydation à 600°C sous air sec, sans ou après traitement à haute température préalable, ou à 800°C, sous air sec, ou à 600°C sous air humide.

L'essai 4 montre que le pourcentage atomique de Si dans l'interphase Si-B-C doit être limité. La présence de Si est toutefois nécessaire, pour éviter une décohésion telle que visible sur la figure 9. Les essais 1 (figures 4, 5) et 4 montrent par ailleurs la meilleure efficacité apportée par la présence de B, en comparaison avec une interphase Si-C. L'interphase doit comprendre de 1% à 20% en pourcentage atomique de silicium, au moins 30% en pourcentage atomique de bore, le reste éventuel étant du carbone.

L'essai 2 (figure 7) et l'essai 3 montrent une dégradation des performances lorsque l'interphase a une épaisseur relativement faible (30 nm), les performances restant toutefois encore meilleures qu'en l'absence d'interphase. L'essai 3 conduit à une conclusion similaire lorsque l'épaisseur d'interphase a une valeur relativement élevée (250 nm), l'épaisseur devant en tout état de cause rester limitée pour conserver à la phase de matrice du matériau proche des fibres sa nature carbone et ne pas représenter une phase de matrice Si-B-C interposée entre les fibres et la phase de nature carbone (une interphase gaine les fibres du renfort fibreux sans créer de liaison entre les fibres capables de transmettre des efforts substantiels, tandis qu'une phase de matrice a pour but de transmettre au renfort fibreux les efforts subis par le matériau composite). Aussi l'épaisseur de l'interphase sera de préférence au moins égale à 10 nm et inférieure à 1 µm.

Les inventeurs pensent, sans prétendre en apporter la preuve scientifique, que l'efficacité de l'interphase Si-B-C selon l'invention, comparée à l'absence d'interphase ou à d'autres interphases, peut être expliquée de la façon suivante.

Dans le cas où il n'y a aucune interphase à l'interface entre fibre carbone et phase de matrice carbone, l'oxydation par l'oxygène (O₂) du milieu ambiant démarre de façon privilégiée à l'interface, comme montré très schématiquement par la figure 13, et se propage le long de la fibre. Il en résulte une déliaison entre la fibre et la matrice et, par conséquent, une diminution importante des caractéristiques du matériau. Cette déliaison est bien visible sur la figure 8.

Par contre, lorsqu'une interphase conforme à l'invention est interposée entre la fibre et la matrice carbone (figure 14), il n'est pas observé de déliaison entre fibre et matrice. Il semble que la présence importante de bore qui réagit avec l'oxygène du milieu ambiant à partir de températures relativement basses pour donner l'oxyde B₂O₃, lequel se liquéfie à relativement faible température (environ 450°C) favorise une oxydation précoce du silicium, avec formation de silice SiO₂. Celle-ci permet une rétention du B₂O₃ par formation d'une "mousse" de silice qui renferme l'oxyde B₂O₃, limitant fortement son départ, et forme un "bouchon" qui s'oppose à la pénétration de l'oxygène du milieu ambiant.

Si l'interphase formée entre la fibre carbone et la matrice carbone ne contient pas de silicium mais seulement du bore et du carbone, il se forme l'oxyde B₂O₃ et du dioxyde de carbone CO₂, avec présence d'un vide à l'interface. En outre, en présence d'humidité, et à des températures relativement basses, B₂O₃ réagit avec la vapeur d'eau et l'espèce formée, (HBO₂) est très volatile. La formation de vide à l'interface fibre-matrice est visible sur la figure 10.

Toujours à titre de comparaison, si l'interphase formée entre la fibre carbone et la matrice carbone ne contient pas de bore, mais seulement du silicium et du carbone, il n'y a pas d'oxydation notable de SiC à des températures inférieures à 1000°C. L'oxydation se fait alors préférentiellement aux interfaces entre fibre et interphase et entre matrice et interphase, entraînant une déliaison. Cette déliaison est visible sur la figure 5 et se traduit par une perte de masse importante du matériau composite dès 600°C.

## Revendications

1. Matériau composite comprenant un renfort fibreux en fibres de carbone ou revêtues de carbone et une matrice constituée de carbone, au moins au voisinage des fibres,
**caractérisé en ce qu'**une interphase est présente entre les fibres du renfort fibreux et la matrice, cette interphase étant constituée de 1 à 20% en pourcentage atomique de silicium, d'au moins 30% en pourcentage atomique de bore, le reste éventuel étant du carbone et/ou du phosphore.

2. Matériau selon la revendication 1,
**caractérisé en ce que** le silicium est au moins en partie remplacé par du germanium.

3. Matériau selon l'une quelconque des revendications 1 et 2,
**caractérisé en ce que** l'épaisseur de l'interphase est inférieure à 1µm.

4. Matériau selon l'une quelconque des revendications 1 à 3 ,
**caractérisé en ce que** l'épaisseur de l'interphase est au moins égale à 10 nm.

5. Matériau selon l'une quelconque des revendications 1 à 4 ,
**caractérisé en ce qu'**il comprend une couche réfractaire ne contenant pas de bore entre les fibres et l'interphase.

6. Matériau selon l'une quelconque des revendications 1 à 5,
**caractérisé en ce que** la matrice comprend au moins une phase carbone au voisinage des fibres et au moins une phase céramique.

7. Procédé d'élaboration d'un matériau composite comprenant la formation d'un renfort fibreux en fibres de carbone ou revêtues de carbone et la densification du renfort fibreux par une matrice constituée de carbone, au moins au voisinage des fibres,
**caractérisé en ce qu'**une interphase constituée de 1 à 20% en pourcentage atomique de silicium, d'au moins 30% en pourcentage atomique de bore, le reste éventuel étant du carbone et/ou du phosphore, est formée sur le carbone des fibres du renfort fibreux par infiltration chimique en phase vapeur à partir d'une phase gazeuse réactive contenant des précurseurs des éléments constitutifs de l'interphase.

8. Procédé selon la revendication 7 ,
**caractérisé en ce que** silicium est au moins en partie remplacé par du germanium.

9. Procédé selon l'une quelconque des revendications 7 et 8,
**caractérisé en ce que** l'interphase est formée avant densification par la matrice.

10. Procédé selon l'une quelconque des revendications 7 et 8,
**caractérisé en ce qu'**il comprend une étape de traitement thermique à une température comprise entre 1200°C et 3000°C, réalisée après densification par la matrice carbone, et l'interphase est formée après l'étape de traitement thermique, dans les espaces créés entre les fibres et la matrice par la décohésion résultant de traitement thermique.

11. Procédé selon l'une quelconque des revendications 7 à 10,
**caractérisé en ce qu'**il comprend une étape de formation d'une couche réfractaire ne contenant pas de bore réalisée après formation du renfort fibreux et avant formation de l'interphase.

12. Procédé selon la revendication 11,
**caractérisé en ce que** la couche réfractaire est en carbure de silicium et est formée par infiltration chimique en phase vapeur à partir d'une phase gazeuse réactive contenant des précurseurs des éléments carbone et silicium, et l'interphase est réalisée dans la continuation de la formation de la couche réfractaire, en modifiant la composition de la phase gazeuse réactive.

## Patentansprüche

1. Verbundmaterial, aufweisend eine Faserverstärkung aus Kohlenstofffasern oder Kohlenstoff-beschichteten Fasern und zumindest benachbart zu den Fasern eine Kohlenstoff-Matrix, **dadurch gekennzeichnet,**
**dass** eine Interphase zwischen den Fasern der Faserverstärkung und der Matrix vorhanden ist, wobei diese Interphase aus 1 bis 20 Atom-% Silicium, mindestens 30 Atom-% Bor, eventueller Rest Kohlenstoff und/oder Phosphor, besteht.

2. Material nach Anspruch 1, **dadurch gekennzeichnet, dass** das Silicium mindestens teilweise durch Germanium ersetzt ist.

3. Material nach einem der Ansprüche 1 oder 2, **dadurch gekennzeichnet, dass** die Dicke der Interphase weniger als 1 µm beträgt.

4. Material nach einem der Ansprüche 1 bis 3, **dadurch gekennzeichnet, dass** die Dicke der Interphase mindestens 10 nm beträgt.

5. Material nach einem der Ansprüche 1 bis 4, **dadurch gekennzeichnet, dass** es eine wärmebeständige Schicht zwischen den Fasern und der Interphase aufweist, welche kein Bor enthält.

6. Material nach einem der Ansprüche 1 bis 5, **dadurch gekennzeichnet, dass** die Matrix mindestens eine Kohlenstoffphase benachbart zu den Fasern und mindestens eine Keramikphase aufweist.

7. Verfahren zur Herstellung eines Verbundmaterials, aufweisend das Erzeugen einer Faserverstärkung aus Kohlenstofffasern oder Kohlenstoff-beschichteten Fasern und die Verdichtung der Faserverstärkung, zumindest benachbart zu den Fasern, durch eine Kohlenstoff-Matrix, **dadurch gekennzeichnet,**
**dass** eine Interphase, welche aus 1 bis 20 Atom-% Silicium, mindestens 30 Atom-% Bor, eventueller Rest Kohlenstoff und/oder Phosphor, besteht, auf dem Kohlenstoff der Fasern der Faserverstärkung durch chemische Infiltration in der Dampfphase gebildet wird ausgehend von einer reaktiven Gasphase, welche Vorstufen der die Interphase bildenden Elemente enthält.

8. Verfahren nach Anspruch 7, **dadurch gekennzeichnet, dass** das Silicium zumindest teilweise durch Germanium ersetzt ist.

9. Verfahren nach einem der Ansprüche 7 oder 8, **dadurch gekennzeichnet, dass** die Interphase vor dem Verdichten durch die Matrix gebildet wird.

10. Verfahren nach einem der Ansprüche 7 oder 8, **dadurch gekennzeichnet, dass** es einen Schritt der Wärmebehandlung bei einer Temperatur zwischen 1200°C und 3000°C aufweist, welcher nach dem Verdichten durch die Kohlenstoffmatrix durchgeführt wird; und dass die Interphase nach dem Schritt der Wärmebehandlung in den Räumen gebildet wird, welche zwischen den Fasern und der Matrix durch Dekohäsion auf Grund der Wärmebehandlung entstehen.

11. Verfahren nach einem der Ansprüche 7 bis 10, **dadurch gekennzeichnet, dass** es einen Schritt des Bildens einer wärmebeständigen, kein Bor enthaltenden Schicht aufweist, welcher nach Erzeugen der Faserverstärkung und vor Bilden der Interphase durchgeführt wird.

12. Verfahren nach Anspruch 11, **dadurch gekennzeichnet, dass** die wärmebeständige Schicht aus Siliciumcarbid ist und durch chemische Infiltration in der Dampfphase ausgehend von einer reaktiven Gasphase gebildet wird, welche Vorstufen der Elemente Kohlenstoff und Silicium enthält; und dass die Interphase bei der Fortsetzung des Bildens der wärmebeständigen Schicht erzeugt wird durch Ändern der Zusammensetzung der reaktiven Gasphase.

## Claims

1. A composite material comprising a fibre reinforcement of carbon fibres or carbon-coated fibres and a matrix constituted by carbon, at least in the vicinity of the fibres,
the material being **characterised in that** an interphase is present between the fibres of the fibre reinforcement and the matrix, said interphase being constituted by 1% to 20% atomic percent of silicon, at least 30% atomic percent of boron, any balance being of carbon and/or of phosphorous.

2. A material according to claim 1,
**characterised in that** the silicon is replaced at least in part by germanium.

3. A material according to claim 1 or 2,
**characterised in that** the thickness of the interphase is less than 1 µm.

4. A material according to any one of claims 1 to 3,
**characterised in that** the thickness of the interphase is not less than 10 nm.

5. A material according to any one of claims 1 to 4,
**characterised in that** it includes a refractory layer containing no boron between the fibres and the interphase.

6. A material according to any one of claims 1 to 5,
**characterised in that** the matrix comprises at least one carbon phase in the vicinity of the fibres and at least one ceramic phase.

7. A method of preparing a composite material comprising forming a fibre reinforcement out of carbon fibres or fibres coated in carbon and densifying the fibre reinforcement with a matrix constituted by carbon, at least in the vicinity of the fibres,
the method being **characterised in that** an interphase constituted by 1% to 20% atomic percent of silicon, at least 30% atomic percent of boron, and any balance being carbon and/or phosphorous, is formed on the carbon of the fibres of the fibre reinforcement by chemical vapour infiltration from a reactive gas containing precursors for the elements constituting the interphase.

8. A method according to claim 7,
**characterised in that** at least part of the silicon is replaced by germanium.

9. A method according to claim 7 or 8,
**characterised in that** the interphase is formed prior to densification by the matrix.

10. A method according to claim 7 or 8,
**characterised in that** it includes a step of heat treatment at a temperature lying in the range 1200°C to 3000°C, performed after densification by the carbon matrix, and the interphase is formed after the heat treatment step in the gaps created between the fibres and the matrix by the decohesion which results from the heat treatment.

11. A method according to any one of claims 7 to 10,
**characterised in that** it includes a step of forming a refractory layer containing no boron that is made after the fibre reinforcement has been formed and before the interphase is formed.

12. A method according to claim 11,
**characterised in that** the refractory layer is of silicon carbide and is formed by chemical vapour infiltration from a reactive gas containing precursors for the elements carbon and silicon, and the interphase is formed as a continuation of the formation of the refractory layer, by modifying the composition of the reactive gas.
